# EUROPEAN PATENT APPLICATION

(11) **EP 3 824 773 A1**
(43) Date of publication of application: **26.05.2021**
(21) Application number: 19837228.6
(22) Date of filing: 17.07.2019
(51) Int. Cl.: A47J 31/04, B65D 85/816

(54) **CONTAINER FOR MICROWAVING FOOD**

(30) Priority: 17.07.2018 ES 201831132 U
(71) Applicant: Sanchez Carrasco, Isidro Aythami, 35001 Las Palmas de Gran Canaria (ES)
(72) Inventor: Sanchez Carrasco, Isidro Aythami, 35001 Las Palmas de Gran Canaria (ES)
(86) International application number: PCT/ES2019/070499
(87) International publication number: WO 2020/016473

(57) **Abstract**

Microwave Meal-Preparation Container containing a circular partition, in such a way that the water to be heated is housed between the bottom of the circular partition and the bottom of the container and the food is housed between the upper part of the circular partition and the removable cap for closing the container, taking into account that the circular partition is crossed perpendicularly by a cylindrical conduit through which the hot water rises and that is covered, in its hole, by a membrane that breaks when the right pressure is reached by heating.

## Description

### SECTOR OF THE ART

The present invention describes a Microwave Meal-Preparation Container.

Its scope of application refers to the field of the foodstuff industry, specifically to microwave meal and beverage-preparation systems.

### STATE OF THE ART

There are a wide variety of devices used for the preparation of food and beverages in the microwave, although most of them consist of a simple airtight container to which water and the extracts corresponding to the food or drink to be prepared are directly added, in order for them to then be heated in a microwave.

However, despite its simplicity, it has the drawback that the flavour obtained will depend fundamentally on the cooking time and the amount of water used, with all the variability that this entails.

### SUBJECT OF THE INVENTION

Therefore, the present invention has the task of presenting a low-cost, easy-to-use Microwave Meal-Preparation Container, whose structure and mode of operation allows it to be used to prepare a wide variety of foods, giving it a great versatility of applications.

Therefore, the novelty of the present invention represents an obvious and substantial improvement over anything known in the current state of the art.

### DESCRIPTION OF THE INVENTION

The invention consists of a Circular Partition that is inserted in a Cylindrical Container that has a Removable Cap in its upper part, in such a way that the water to be heated is between the bottom of the Circular Partition and the bottom of the Cylindrical Container, and the food is between the upper part of the Circular Partition and the Removable Cap. Also, the circular partition is crossed perpendicularly by a cylindrical conduit through which hot water rises and is covered at its upper portion by a waterproof membrane designed to break when the interior of the container reaches the right pressure.

In this manner, the operation of the invention is as follows: the water contained in the lower part of the Cylindrical Container, when heated, rises through the cylindrical conduit integrated in the Circular Partition to the upper portion thereof, where the food to be hydrated is contained, and where it will be ready for direct consumption.

### DESCRIPTION OF THE FIGURES

**Figure** 1.- Shows an upper and lower view of the Circular Partition.
**Figure** 2.- Shows the arrangement of the Waterproof Membrane in the Circular Partition.
**Figure** 3.- Shows the arrangement of the Removable Cap in the Cylindrical Container.
**Figure** 4.- Shows an overall view with the arrangement of the different elements.

### PREFERRED EMBODIMENT OF THE INVENTION

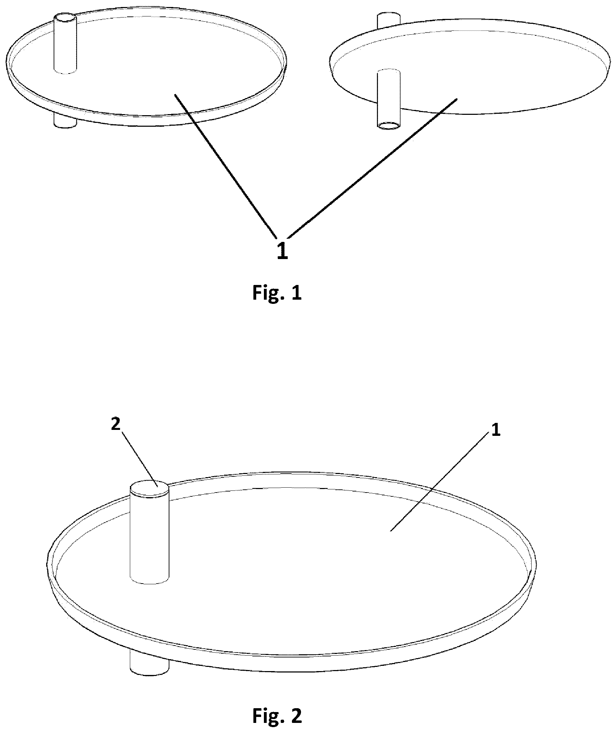

As can be seen in figure 1, a Circular Partition (1) crossed perpendicularly by a cylindrical conduit that allows hot water to rise through its interior.

In figure 2, we can see the location of a Waterproof Membrane (2) located in the upper part of the cylindrical conduit integrated in the Circular Partition (1).

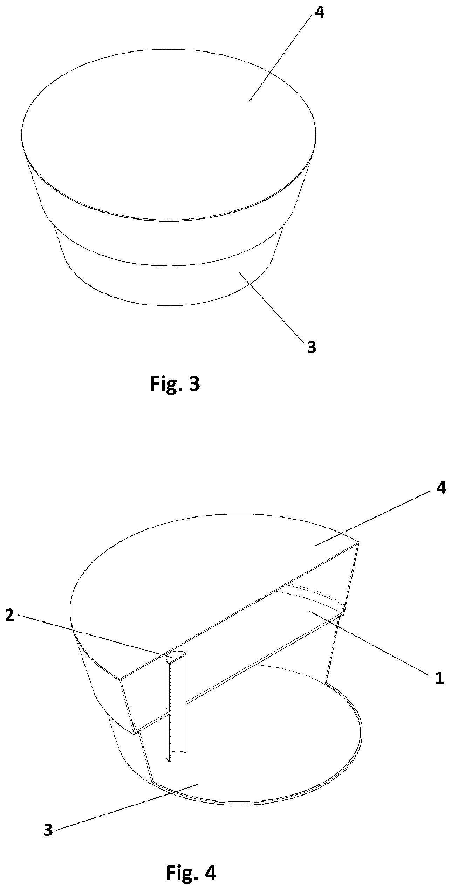

In figure 3, we can see the location of a Removable Cap (4) located in the upper part of the Cylindrical Container (3).

Finally, in figure 4 we can see that the Circular Partition (1) is embedded in the Cylindrical Container (3), and also how the latter is sealed in its upper part by the Removable Cap (4).

Within the essentiality of the invention are the detail variants, which are also protected, the morphology of the container, the partition and the lid, as well as the materials used in the construction of the invention being able to vary.

## Claims

1. **Microwave Meal-Preparation Container, characterised by** having a Circular Partition (1), traversed by a cylindrical conduit, covered at its upper end by a Waterproof Membrane (2), and embedded in a Cylindrical Container (2) sealed by a Removable Cap (4).

2. **Microwave Meal-Preparation Container,** according to claim 1, and **characterised in that** the waterproof membrane (2) is broken by the steam pressure generated, thus guaranteeing the necessary pressure for the rise of the water.
